# EUROPEAN PATENT SPECIFICATION

(11) **EP 4 200 064 B1**
(45) Date of publication and mention of the grant of the patent: **23.09.2026**
(21) Application number: 21769243.3
(22) Date of filing: 17.08.2021
(51) Int. Cl.: B01D 67/00, B01D 69/02, B01D 71/32, B01D 71/36

(54) **ARTICLE INCLUDING FILTRATION MEDIA AND FLUOROPOLYMER AND METHODS OF MAKING AND USING SAME**
ARTIKEL MIT FILTRATIONSMEDIEN UND FLUORPOLYMER SOWIE VERFAHREN ZUR HERSTELLUNG UND VERWENDUNG DAVON
ARTICLE COMPRENANT UN MILIEU DE FILTRATION ET UN FLUROPOLYMÈRE ET PROCÉDÉS DE FABRICATION ET D'UTILISATION

(30) Priority: 18.08.2020 US 202063067053 P
(43) Date of publication of application: 28.06.2023
(73) Proprietor: DONALDSON COMPANY, INC., Bloomington, MN 55431 (US)
(72) Inventor: SONTAG, Stephen K., Minneapolis, Minnesota 55440-1299 (US); GOERTZ, Matthew P., Minneapolis, Minnesota 55440-1299 (US)
(74) Representative: Potter Clarkson
(86) International application number: PCT/US2021/046256
(87) International publication number: WO 2022/040154

(56) References cited:
- EP-A1- 0 641 594
- EP-A2- 0 183 989
- CN-A- 108 159 477
- US-A- 5 554 414

## Description

### Background

Fluorinated chemicals have allowed for the creation of surfaces that repel not only water, but also oils. However, fluoropolymers with long fluoroalkyl side chains have been confirmed to produce perfluoroalkyl acids by hydrolyzation and oxidative degradation. For polymers with perfluorooctyl side groups, degradation may result in the production of perfluorooctanoic acid (PFOA), which can persistent and bioaccumulate in the environment.

Porous articles comprising a crosslinked fluorinated polymer are known from US 5 554 414.

### Summary

This disclosure describes articles including poly(2,2,3,3,4,4,4-heptafluorobutyl methacrylate) or poly(2,2,3,3,4,4,4-heptafluorobutyl acrylate), fluoropolymers that do not form perfluorooctanoic acid (PFOA) when they degrade and that exhibit unexpectedly good oil repellency. The articles include a porous filtration membrane to which the fluoropolymer has been applied (for example, coated). This disclosure further describes methods of making the fluoropolymer-containing articles and methods of using the fluoropolymer-containing articles.

In one aspect, this disclosure describes an article that includes a porous filtration medium and a fluoropolymer, wherein the fluoropolymer is disposed on the porous filtration medium, forming a treated porous filtration medium. The treated porous filtration medium is oleophobic on at least one major surface .The treated porous filtration medium has an oleophobicity of 1 or higher, 2 or higher, 3 or higher, 4 or higher, 5 or higher, or 6 or higher on at least one major surface, as determined by AATCC test method 118. The oleophobicity may be up to 8 or up to 7. The fluoropolymer is poly(2,2,3,3,4,4,4-heptafluorobutyl methacrylate) or poly(2,2,3,3,4,4,4-heptafluorobutyl acrylate).

In another aspect, this disclosure describes a method of making an article that includes a treated porous filtration medium. The method includes depositing a fluoropolymer-liquid mixture onto a porous filtration medium by contacting the porous filtration medium with the mixture comprising a fluoropolymer and a liquid, to form the treated porous filtration medium, and removing the liquid. The fluoropolymer is poly(2,2,3,3,4,4,4-heptafluorobutyl methacrylate) or poly(2,2,3,3,4,4,4-heptafluorobutyl acrylate).

As used herein, "oleophobicity" refers to a rating on a scale of 1 to 8, determined according to AATCC TM118-2013e2 entitled "Oil Repellency: Hydrocarbon Resistance Test" modified by rounding the oleophobicity ratings to the nearest integer value.

Any reference to standard methods (e.g., ASTM, TAPPI, AATCC, etc.) refer to the most recent available version of the method at the time of filing of this disclosure unless otherwise indicated.

In the context of polymers, the phrase "high molecular weight" is used to refer to polymers having a weight average molecular weight (Mn) of at least 10 kDa. The phrase "low molecular weight" is used to refer to polymers having a weight average molecular weight (Mn) of less than 10 kDa.

### Brief Description of the Figures

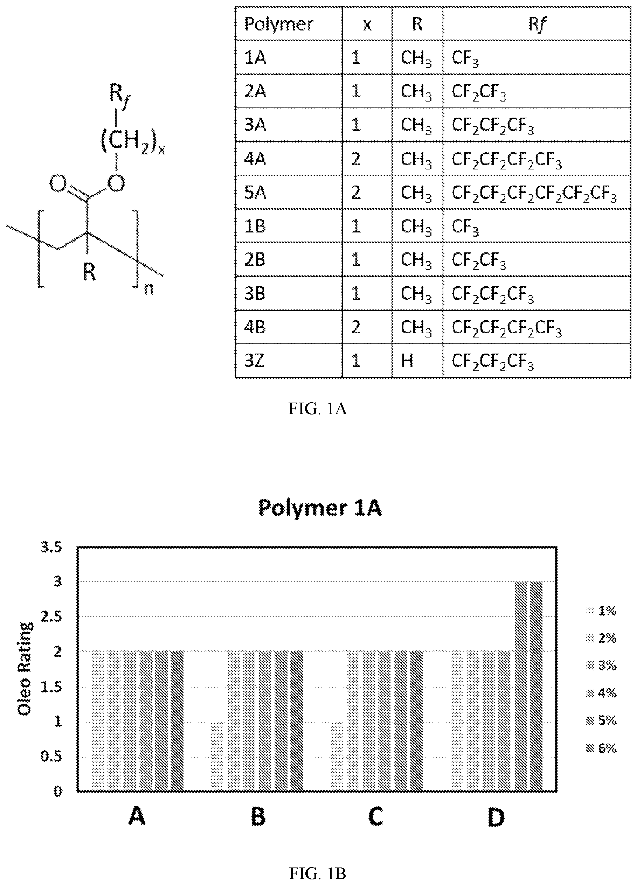

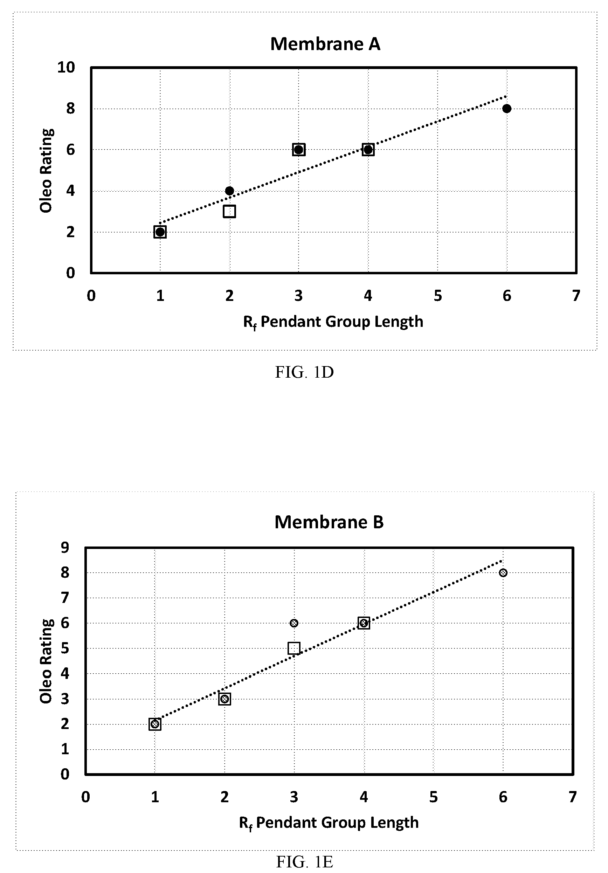

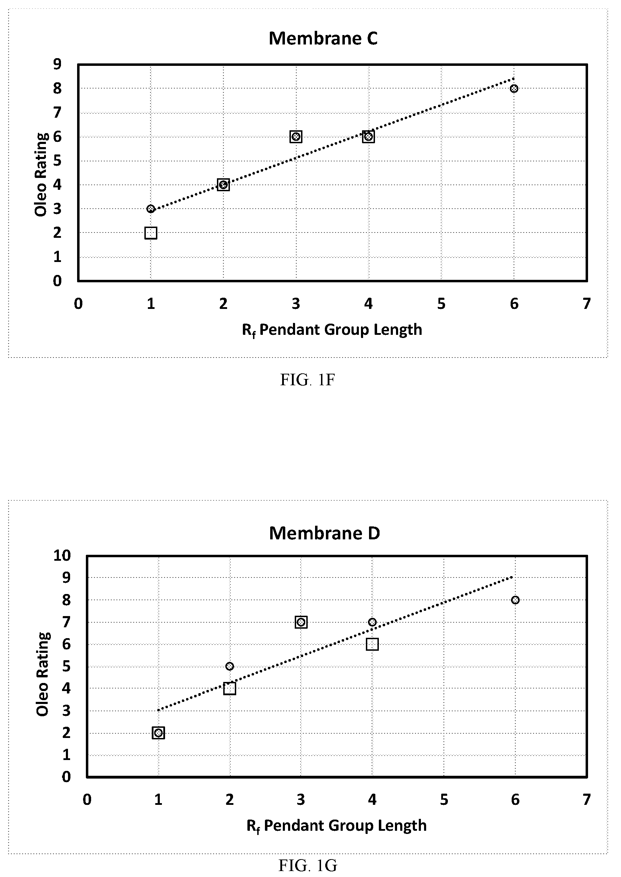

FIG. 1A shows the structures of polymers used in the Examples of this disclosure, demonstrating the different chain lengths of the fluorinated segment.
FIG. 1B shows the oleophobicity ratings of different concentrations of high Mn poly(2,2,2-trifluoroethyl methacrylate) ("Polymer 1A") polymer solution on four different types of media, as further described in Example 1.

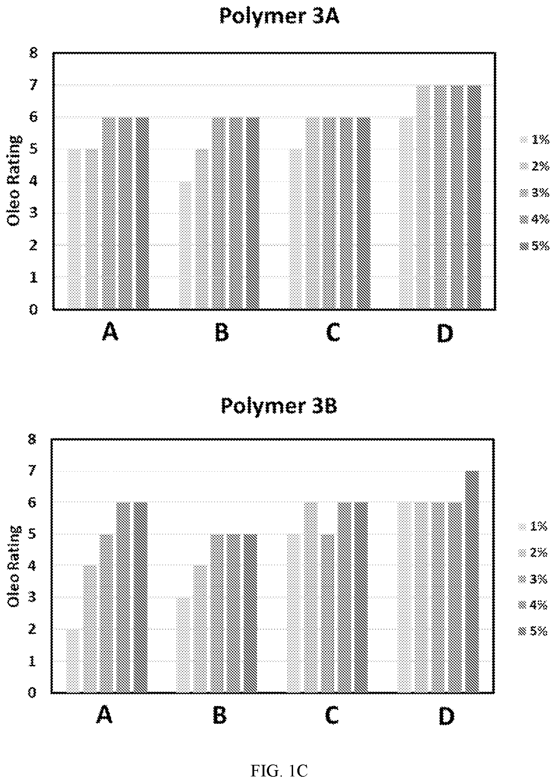

FIG. 1C shows the oleophobicity rating of different concentrations of poly(2,2,3,3,4,4,4-heptafluorobutyl methacrylate) solution on four different types of media, as further described in Example 1. Top panel shown Polymer 3A and bottom panel show Polymer 3B.
FIG. 1D - FIG. 1G each show a plot of the number of fluorinated carbons in the pendant group of different polymers versus the oleophobicity rating of the polymer on four different media types (Membrane A - Membrane D, respectively), as further described in Example 1. High Mn polymer (Polymers 1A, 2A, 3A, 4A, and 5A) data points are represented by filled circles; low Mn polymer (Polymers 1B, 2B, 3B, and 4B) data points are represented by open squares. Dotted lines are trendline (best linear fit), calculated with Microsoft Excel using all of the values plotted.

### Detailed Description

This disclosure describes articles including poly(2,2,3,3,4,4,4-heptafluorobutyl methacrylate) or poly(2,2,3,3,4,4,4-heptafluorobutyl acrylate), fluoropolymers that do not form perfluorooctanoic acid (PFOA) when they degrade and that exhibit unexpectedly good oil repellency. The articles include a porous filtration membrane on which the fluoropolymer is disposed. This disclosure further describes methods of making the fluoropolymer-containing articles and methods of using the fluoropolymer-containing articles.

### Fluoropolymers

Poly(2,2,3,3,4,4,4-heptafluorobutyl methacrylate) (also referred to herein as Polymer 3A or Polymer 3B) may be depicted as shown in Formula I:

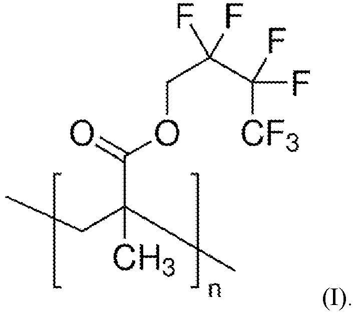

Poly(2,2,3,3,4,4,4-heptafluorobutyl acrylate) (also referred to herein as Polymer 3Z) may be depicted as shown in Formula II:

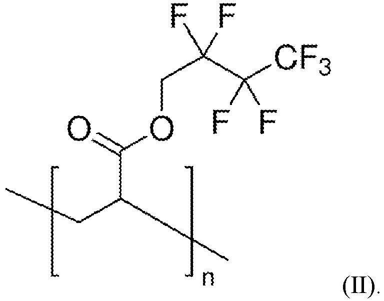

For Formula I or Formula II, n is typically at least 10, at least 25, at least 50, at least 70, more preferably at least 200, or most preferably at least 400. In some embodiments for Formula I or Formula II, n may be up to 500, up to 600, up to 1000, or up to 1100. For example, in an exemplary embodiment, n may be in a range of 70 to 1000. N may be in a range of 100 to 800. In another exemplary embodiment, n is in a range of 150 to 500.

Without wishing to be bound by theory, it is believed that although higher molecular weight polymers (that is, polymers having a high n of, for example, at least 1,000) may not provide improved initial oleophobicity over lower molecular weight polymers (for example, polymers having an of less than 80), porous filtration media having higher molecular weight polymers disposed thereon may show increased resistance to a drop in oleophobicity when exposed to certain liquids (such as gasoline) than porous filtration media having lower molecular weight polymers disposed thereon, and thus higher molecular weight polymers may provide improved oleophobicity during use of the articles.

Thus, in some embodiments, when the fluoropolymer is poly(2,2,3,3,4,4,4-heptafluorobutyl methacrylate), the number average molecular weight (Mn) of the fluoropolymer is at least 3 kDa, at least 5 kDa, at least 10 kDa, at least 100 kDa, at least 150 kDa, at least 200 kDa, at least 250 kDa, at least 300 kDa, or at least 350 kDa. In some embodiments, when the fluoropolymer is poly(2,2,3,3,4,4,4-heptafluorobutyl acrylate), the number average molecular weight (Mn) of the fluoropolymer is at least 10 kDa, at least 100 kDa, at least 150 kDa, at least 200 kDa, at least 250 kDa, at least 300 kDa, or at least 350 kDa.

Poly(2,2,3,3,4,4,4-heptafluorobutyl methacrylate) or poly(2,2,3,3,4,4,4-heptafluorobutyl acrylate) may be commercially obtained (including, for example, from Polymer Source, Montreal, Canada; or Sigma Aldrich, St. Louis Missouri) or may be synthesized using know polymerization techniques. Exemplary polymerization techniques for both polymers are described in the Examples.

### Porous Filtration Medium

Any suitable porous filtration medium may be used as a part of the fluoropolymer-containing article or to form the fluoropolymer-containing article.

In some embodiments, the porous filtration medium may include expanded polytetrafluoroethylene (ePTFE), cellulose, cellulose acetate, polyurethane, polypropylene, polyethylene, polyether sulfone, polyvinylidene fluoride, polycarbonate, polyolefin, polyamide (nylon), polyester, polysulfone, polyether, acrylic polymers, methacrylic polymers, polystyrene, cellulosic polymer, or glass, or a combination thereof (for example, blends, mixtures, or copolymers thereof).

In some embodiments, the porous filtration medium may preferably include expanded polytetrafluoroethylene (ePTFE).

In some embodiments, the porous filtration medium may include a membrane, a nonwoven web, a woven web, a porous sheet, a sintered plastic, a sintered metal, a screen (including for example, a woven screen, an expanded screen, an extruded screen, etc.), or a high density mesh, or combinations thereof.

In some embodiments, the porous filtration medium may include synthetic fibers, naturally occurring fibers, or combinations thereof (for example, blends or mixtures thereof). The substrate is typically of a porous nature and of a specified and definable performance characteristic such as pore size, Frazier air permeability, and/or another suitable metric.

In some embodiments, the porous filtration medium may include a thermoplastic or a thermosetting polymer fiber. The polymers of the fiber may be present in a single polymeric material system, in a bicomponent fiber, or in a combination thereof. A bicomponent fiber may include, for example, a thermoplastic polymer. In some embodiments, a bicomponent fiber may have a core-sheath structure, including a concentric or a non-concentric structure. In some embodiments, the sheath of the bicomponent fiber may have a melting temperature lower than the melting temperature of the core such that, when heated, the sheath binds to the other fibers in the layer while the core maintains structural integrity. Additional exemplary embodiments of bicomponent fibers include side-by-side fibers or island-in-the-sea fibers.

In some embodiments, the porous filtration medium may include a cellulosic fiber including, for example, a softwood fiber (such as mercerized southern pine), a hardwood fiber (such as Eucalyptus fibers), a regenerated cellulose fiber, a mechanical pulp fiber, or a combination thereof (for example, a mixture or blend thereof).

In some embodiments, the porous filtration medium may include a glass fiber including, for example, a microglass, a chopped glass fiber, or a combination thereof (for example, a mixture or blend thereof).

### Methods of Making the Fluoropolymer-Containing Articles

Fluoropolymer (poly(2,2,3,3,4,4,4-heptafluorobutyl methacrylate) or poly(2,2,3,3,4,4,4-heptafluorobutyl acrylate)) is disposed on the porous filtration medium to form a treated porous filtration medium. The treated porous filtration medium may form the fluoropolymer-containing article or a portion of the fluoropolymer-containing article.

In some embodiments, in addition to the treated porous filtration medium, the fluoropolymer-containing article may further include a support layer. The support layer may be added before or after the treatment of the porous filtration medium to form the treated porous filtration medium. Any suitable material may be used for the support layer, depending on the intended use of the article. In an exemplary embodiment, however, the support layer may include a polymer material such as polypropylene, polyethylene, polyester, or nylon, or a combination thereof (for example, a mixture or blend thereof).

In some embodiments, when a first major surface of the support layer is in contact with a first major surface of the porous filtration medium, the support layer may be added before treatment of the porous filtration medium with the fluoropolymer so that the fluoropolymer is coated on a second major surface of the porous filtration medium and a second major surface of the porous filtration medium.

In some embodiments, when the fluoropolymer is disposed on the porous filtration medium, the porous filtration medium may be formed by depositing a fluoropolymer-liquid mixture onto the porous filtration medium by contacting the porous filtration medium with a mixture including the fluoropolymer and a liquid, and removing the liquid. In some embodiments, the liquid in the fluoropolymer-liquid solution includes a solvent, that is, a liquid in which at least some of the fluoropolymer is dissolved. Alternatively, however the fluoropolymer may be applied to the porous filtration medium via an emulsion. For example, the fluoropolymer may be applied to the porous filtration medium via water-fluoropolymer emulsion.

After removal of the liquid, the fluoropolymer is disposed on at least one major surface of the porous filtration medium. For example, as described in an exemplary embodiment in the Examples, the fluoropolymer may be coated on a porous filtration medium by dipping the porous filtration medium in a mixture including the fluoropolymer and a solvent and then removing the solvent.

When the liquid includes a solvent, any suitable solvent may be used. In some embodiments, the fluoropolymer may be completely dissolved in the solvent when the fluoropolymer is applied to the porous filtration medium. Without wishing to be bound by theory, it is believed that a solution in which the fluoropolymer is completely dissolved in the solvent may be preferred when the porous filtration medium has small pore sizes (for example, less than 0.1 µm); however, a solution or an emulsion may be used when the porous filtration medium has larger pore sizes.

In some embodiments, the solvent may include an organic solvent. Alternatively, the solvent may include an inorganic solvent such as supercritical carbon dioxide (SCCO₂).

Exemplary organic solvents include methyl ethyl ketone (MEK) and a fluorosolvent including, for example, a fluorinated heptane and a fluorinated ether. Exemplary fluorinated ethers include ethoxy nonafluorobutane, ethoxy nonafluoroisobutane, methoxy nonafluorobutane (also referred to as methyl nonafluorobutyl ether), and methoxy nonafluoroisobutane (also referred to as methyl nonafluoroisobutyl ether). Combinations of fluorinated ethers may also be used. In some embodiments, the fluorinated ether may include a Novec^{™} Engineering Fluid (3M, St. Paul, MN) such as Novec^{™} 7100 (which includes methyl nonafluoroisobutyl ether and methyl nonafluorobutyl ether) or Novec^{™} 7200 (which includes two inseparable isomers of ethoxy-nonafluorobutane).

The amount of fluoropolymer included in the fluoropolymer-liquid mixture at the time of coating may be selected depending on the desired oleophobicity. In some embodiments, the amount of fluoropolymer in the mixture may be up to 8 %, up to 7 %, up to 6 % (w/v), up to 5 % (w/v), up to 4 % (w/v), up to 3 % (w/v), up to 2.5 % (w/v), up to 2 % (w/v), up to 1.5 % (w/v), or up to 1 % (w/v). In some embodiments, the amount of fluoropolymer in the mixture may be at least 0.5 % (w/v), at least 1 % (w/v), at least 1.5 % (w/v), at least 2 % (w/v), at least 2.5 % (w/v), at least 3 % (w/v), at least 4 % (w/v), at least 5 % (w/v), or at least 6 %.

In some embodiments, contacting the porous filtration medium with the fluoropolymer-liquid mixture includes immersing the porous filtration medium in the fluoropolymer-liquid mixture. In an exemplary embodiment, immersing the porous filtration medium in the fluoropolymer-liquid mixture includes passing the porous filtration medium through the fluoropolymer-liquid mixture so that the media enter and exits the fluoropolymer-liquid mixture at approximately the same angle.

In some embodiments, the liquid of the fluoropolymer-liquid mixture may be removed from the porous filtration medium by drying at an ambient temperature (for example, at a temperature in a range of 20 °C to 25 °C) for a time sufficient to remove the liquid (for example, a solvent).

In some embodiments, applying fluoropolymer to the porous filtration medium to form a treated porous filtration medium may further include heat treating the treated porous filtration medium. Such heating may remove the liquid from the fluoropolymer-liquid mixture after the fluoropolymer is deposited on the porous filtration medium. Moreover, without wishing to be bound by theory, it is believed that such heat treatment or "curing" may also increase the oleophobicity of the treated porous filtration medium by facilitating orientation of the fluoropolymer.

The porous filtration medium may be heated by any suitable means. In an exemplary embodiment, the porous filtration medium is heated in an oven. In another exemplary embodiment, the porous filtration medium may be heated using a hot roller, steam, an infrared heater, etc.

In some embodiments, including when the porous filtration medium is heated in an oven, the porous filtration medium may be heated at a temperature greater than the glass transition temperature of the fluoropolymer. In some embodiments, the porous filtration medium is heated at a temperature of at least 70 °C, at least 80 °C, at least 90 °C, at least 100 °C, at least 110 °C, or at least 120 °C. In some embodiments, the porous filtration medium is heated at a temperature of up to 130 °C, up to 140 °C, or up to 150 °C. For example, in an exemplary embodiment, the porous filtration medium may be heated at a temperature in a range of 110 °C to 130 °C. In the Examples, the porous filtration medium is heated at a temperature of 120 °C.

In some embodiments, including when the porous filtration medium is heated using a hot roller, steam, an infrared heater, the porous filtration medium may be heated to a temperature greater than the glass transition temperature of the fluoropolymer. In some embodiments, the porous filtration medium is heated at a temperature to at least 70 °C, at least 80 °C, at least 90 °C, at least 100 °C, at least 110 °C, or at least 120 °C. In some embodiments, the porous filtration medium is heated to a temperature of up to 130 °C, up to 140 °C, or up to 150 °C. For example, in an exemplary embodiment, the porous filtration medium may be heated to a temperature in a range of 110 °C to 130 °C.

In some embodiments, the porous filtration medium may be heated for at least 1 minute, at least 2 minutes, or at least 3 minutes. In some embodiments, the porous filtration medium may be heated for up to 3 minutes, up to 4 minutes, up to 5 minutes, or up to 10 minutes. For example, in in an exemplary embodiment, the porous filtration medium may be heated for at least 1 minute and up to 10 minutes. In the Examples, the porous filtration medium is heated for 3 minutes or 5 minutes.

### Treated Porous Filtration Medium

According to an embodiment, after fluoropolymer (poly(2,2,3,3,4,4,4-heptafluorobutyl methacrylate) or poly(2,2,3,3,4,4,4-heptafluorobutyl acrylate)) has been disposed on the porous filtration medium to form the treated porous filtration medium, the treated porous filtration medium is oleophobic on at least one major surface of the porous filtration medium, as determined by AATCC test method 118 and rounding the oleophobicity ratings to the nearest integer value. After fluoropolymer (poly(2,2,3,3,4,4,4-heptafluorobutyl methacrylate) or poly(2,2,3,3,4,4,4-heptafluorobutyl acrylate)) has been disposed on the porous filtration medium to form the treated porous filtration medium, the treated porous filtration medium exhibits an oleophobicity of 1 or higher, 2 or higher, 3 or higher, 4 or higher, 5 or higher, or 6 or higher on at least one major surface of the porous filtration medium, as determined by AATCC test method 118 and rounding the oleophobicity ratings to the nearest integer value. In some embodiments, the treated porous filtration medium exhibits an oleophobicity of up to 7 on at least one major surface of the porous filtration medium. The oleophobicity of the treated porous filtration medium may be 8 or lower. The oleophobicity of the treated porous filtration medium may be 3 or higher, 4 or higher, or 5 or higher. In an exemplary embodiment, the treated porous filtration medium exhibits an oleophobicity in a range of 5 to 7 or in a range of 6 to 7.

In some embodiments, the treated porous filtration medium exhibits the same oleophobicity rating on two major surfaces of the porous filtration medium. For example, the treated porous filtration medium may exhibit an oleophobicity in a range of 1 or higher, 2 or higher, 3 or higher, 4 or higher, 5 or higher, or 6 or higher, or from 5 to 7 or from 6 to 7, on two major surfaces of the porous filtration medium (for example, on a front side and a backside of the porous filtration medium). The oleophobicity of the treated porous filtration medium may be 8 or lower on two major surfaces of the porous filtration medium. The oleophobicity of the treated porous filtration medium may be 3 or higher, 4 or higher, or 5 or higher on two major surfaces of the porous filtration medium.

In some embodiments, two major surfaces of the fluoropolymer-containing article may exhibit an oleophobicity in a range of 1 or higher, 2 or higher, 3 or higher, 4 or higher, or 5 or higher, or from 5 to 7 or in a range of 6 to 7. The oleophobicity of the two major surfaces of the fluoropolymer-containing article may be 8 or lower. The oleophobicity of the two major surfaces of the fluoropolymer-containing article may be 3 or higher, 4 or higher, or 5 or higher. For example, when a first major surface of a support layer is in contact with a first major surface of the porous filtration medium, a second major surface of the porous filtration medium and a second major surface of the porous filtration medium may exhibit an oleophobicity in a range of 5 to 7 or in a range of 6 to 7.

That an oleophobicity of at least 5 or at least 6 can be obtained using poly(2,2,3,3,4,4,4-heptafluorobutyl methacrylate) was surprising because, as further described in Example 1, this polymer - at both high and low number average molecular weight (Mn) - exhibits increased oleophobicity compared to other fluoropolymer methacrylates. Specifically, poly(2,2,3,3,4,4,4-heptafluorobutyl methacrylate) exhibits oleophobicity like that of poly(1H,1H,2H,2H-nonafluorohexyl methacrylate); poly(1H,1H,2H,2H-nonafluorohexyl methacrylate) has an additional fluorinated carbon relative to poly(2,2,3,3,4,4,4-heptafluorobutyl methacrylate) and would, therefore, be expected to have increased oleophobicity.

Moreover, an oleophobicity of at least 5 or at least 6 can also be obtained using poly(2,2,3,3,4,4,4-heptafluorobutyl acrylate), as further described in Example 3.

### Methods of Using the Fluoropolymer-Containing Articles

The fluoropolymer-containing articles described herein may be used for any suitable application. In exemplary embodiments, the fluoropolymer-containing articles may be used as a biphasic separator. The two phases to be separated may be selected depending on the intended use of the article. For example, the articles may be used as an air/oil separator for air compressors, as a water/fuel separator, or as a water/oil separator. In some embodiments, the separator may be a coalescer.

The present invention is illustrated by the following examples.

### EXAMPLES

### Materials and Methods

All reagents, starting materials, and solvents used in the following examples were purchased from commercial suppliers (such as Sigma Aldrich, St. Louis, MO) and were used without further purification unless otherwise indicated.

### Number Average Molecular Weight (Mn) & Weight Average Molecular Weight (Mw)

Two PHENOGEL^{™} Mixed C columns (5 µm, 300 mm x 7.8 mm; available from Phenomenex, Torrance, CA) were used in the loop. Hexafluoroisopropanol (HFIPA) was used as the solvent at a flow rate of 0.5 mL/min. Column temperature was 45 °C. A refractive index detector was used as the sole detection method. A set of PMMA polymers (poly(methyl methacrylate) standard ReadyCal set Mp 800-2,200,000 Da, from Sigma Aldrich, St. Louis, MO) with the values of the molecular weight corresponding to that of the maximum of the chromatographic peak (Mp) ranging from 800 Da to 2,200 kDa were used to generate a calibration curve, which is shown in Table 1.

All number average molecular weight (Mn), weight average molecular weight (Mw), and degree of polymerization (n) values reported herein were obtained using this calibration set and GPC parameters. Degree of polymerization (n) was determined by dividing the Mn value by the monomer's molecular weight (MW).

**Table 1.**

| **Retention Time (min)** | **Mp** | **Mw** | **Mn** | **Log Mp** |
|---|---|---|---|---|
| 14.4 | 2200000 | 1890000 | 1650000 | 6.3 |
| 15.2 | 340000 | 335000 | 323000 | 5.5 |
| 15.8 | 608000 | 592000 | 561000 | 5.8 |
| 16.3 | 41400 | 40300 | 38100 | 4.6 |
| 16.9 | 88500 | 86700 | 83700 | 4.9 |
| 17.8 | 5050 | 4990 | 4690 | 3.7 |
| 18.7 | 9680 | 9590 | 9100 | 4.0 |
| 19.5 | 800 | 831 | 730 | 2.9 |

### Glass Transition Temperature (T_{g})

Glass transition temperatures (Tg) of polymers were obtained using a Q2000 DSC (available from TA Instruments, New Castle, DE). A typical DSC run procedure was as follows: Cycle 1: room temperature to 105 °C to 23 °C. Cycle 2: 23 °C to 105 °C to -90 °C. Cycle 3: -90 °C to 105 °C to -90 °C. Cycle 4: -90 °C to 105 °C to 23 °C. The scan rate was 10 °C/min. The glass transition peak was calculated using the embedded software features on the second cycle.

### Fluoropolymers

### General Fluoropolymer Synthesis Method

A 20 mL scintillation vial was charged with the indicated amount of monomer, azobisisobutyronitrile (AIBN), and solvent, and a magnetic stir bar was added. The vial was securely closed and sparged with Argon for 5 minutes to remove air. The vial containing the reaction mixture was placed in a custom aluminum block affixed to a hot plate/magnetic stirrer controlled utilizing a feedback probe and preheated to 65 °C. The polymerization reaction was allowed to proceed overnight (at least 12 hours) at 65 °C. Kinetic analysis revealed the reactions were complete within 10 hours. The reaction mixture was cooled to room temperature and diluted with solvent to a desired w/v%. The concentration of the solution was validated by pipetting 1 mL of the solution into a pre-weighed petri dish. The solvent was evaporated and the petri dish was weighed again to obtain mass of polymer.

The resulting solution was used directly for coating of samples, as further described below.

### poly(2,2,2-trifluoroethyl methacrylate) ("Polymer 1A" & "Polymer 1B")

High Molecular Weight (MW) poly(2,2,2-trifluoroethyl methacrylate) ("Polymer 1A," Mn = 25.3 kDa, Mw = 61.4 kDa, Mw/Mn = 2.4) was purchased from Scientific Polymer Products (Ontario, New York). Low MW poly(2,2,2-trifluoroethyl methacrylate) ("Polymer 1B," Mn = 3.1 kDa, Mw = 8.6 kDa, Mw/Mn = 2.8) was purchased from Polymer Source (Montreal, Canada).

### poly(2,2, 3,3, 3-pentafluoropropyl methacrylate) ("Polymer 2A" & "Polymer 2B")

High MW poly(2,2,3,3,3-pentafluoropropyl methacrylate) ("Polymer 2A") was produced as described in the General Fluoropolymer Synthesis Method using 5 g 2,2,3,3,3-pentafluoropropyl methacrylate, 0.024 g AIBN, and 3 mL NOVEC^{™} 7100 Engineered Fluid. The resulting polymer exhibited Mn = 11.5 kDa, Mw = 23.4 kDa, Mw/Mn = 2.0.

Low Molecular Weight (MW) poly(2,2,3,3,3-pentafluoropropyl methacrylate) ("Polymer 2B") was produced as described in the General Fluoropolymer Synthesis Method using 4 g 2,2,3,3,3-pentafluoropropyl methacrylate, 0.06 g AIBN, and 3 mL tetrahydrofuran (THF). Instead of being further diluted with solvent, as described in the General Fluoropolymer Synthesis Method, polymer was precipitated from THF using hexane and vacuum filtered out using cellulose filter paper in a Buechner funnel. The polymer was washed with copious amounts of hexane and air dried. Molecular weight data was not obtained for Polymer 2B.

### poly(2,2,3,3,4,4,4-heptafluorobutyl methacrylate) ("Polymer 3A" & "Polymer 3B")

High Molecular Weight (MW) poly(2,2,3,3,4,4,4-heptafluorobutyl methacrylate) ("Polymer 3A," Mn = 30.4 kDa, Mw = 73.0 kDa, Mw/Mn = 2.4) was purchased from Polymer Source (Montreal, Canada). Low MW poly(2,2,3,3,4,4,4-heptafluorobutyl methacrylate) ("Polymer 3B," Mn = 3.9 kDa, Mw = 9.8 kDa, Mw/Mn = 2.5) was purchased from Polymer Source (Montreal, Canada).

### poly(lH, 1H, 2H, 2H-nonafluorohexyl methacrylate) ("Polymer 4A" & "Polymer 4B")

High Molecular Weight (MW) poly(1H,1H,2H,2H-nonafluorohexyl methacrylate) ("Polymer 4A") polymer (Mn = 52.5 kDa, Mw = 135 kDa, Mw/Mn = 2.6) was purchased from Polymer Source (Montreal, Canada). Low MW poly(1H,1H,2H,2H-nonafluorohexyl methacrylate) ("Polymer 4B," Mn = 7.1 kDa, Mw = 15.6 kDa, Mw/Mn = 2.2) was purchased from Polymer Source (Montreal, Canada).

### poly(1H,1H,2H,2H-perfluorooctyl methacrylate) ("Polymer 5")

High Molecular Weight (MW) poly(1H,1H,2H,2H-perfluorooctyl methacrylate) ("Polymer 5A") was produced as described in the General Fluoropolymer Synthesis Method using 2 g 1H,1H,2H,2H-perfluorooctyl methacrylate, 0.07 g AIBN, and 2 mL NOVEC^{™} 7200 Engineered Fluid. The resulting polymer exhibited Mn = 55.2 kDa, Mw = 108.0 kDa, and Mw/Mn = 2.0.

### Media

ePTFE media included Membrane A - Membrane D. Features of these media are shown in Table 2, below.

Air permeability in cubic feet per minute (CFM) was determined using an Air Permeability Tester Model FX3300 (Texttest AG, Schwerzenbach, Switzerland) at 0.5 inch of water of differential pressure. Air permeability may also be expressed in cm/min at 124.5 Pa differential pressure.

Thickness was determined using a Model 3W dial comparator (from B.C. Ames Incorporated, Framingham, MA) with base plate and moveable presser foot at 1.5 psi.

Pore Size was determined by capillary extrusion porometry with a Capillary Flow Porometer (from Porous Materials Inc., Ithaca, NY) using POROFIL^{™} (from Quantachrome Instruments, Boynton Beach, CA) as a wetting liquid and a dry up/wet up method.

**Table 2.**

| **Membrane** | **Permeability** (CFM @ 0.5" H₂O) | **Permeability** (cm/min @ 124.5 Pa | **Thickness (mils)** | **Thickness** (µm) | **Average pore size** |
|---|---|---|---|---|---|
| A | 0.15 +/- 0.08 | 4.6 +/- 2.4 | 9.5 +/- 1.0 | 241+/- 25 | 0.2 µm |
| B | 0.3 - 1.0 | 9.1 - 30.5 | 6.2 +/- 2.3 | 157 +/- 58 | not tested |
| C | ≥ 2.0 | ≥ 61 | 7.4 - 14.5 | 188 - 368 | 1.5 µm |
| D | 0.12 - 0.3 | 3.7 - 9.1 | 9.8 - 13.8 | 249 - 351 | 0.7 µm |

### Coating the Media

A coating solution including 1 % - 6 % (w/v) polymer in solvent (e.g., MEK or a fluorinated solvent) was poured into an aluminum petri dish to a sufficient depth so that media to be coated may be adequately submerged. The media was submerged at one end of the coating solution and pulled through the solution at a consistent angle until the entire media or substrate had been exposed to the solution. Once the media completely exited the solution at approximately the same angle as at entrance, the excess solvent on the surface and in the pores was allowed to drain for a few seconds. The coated media was then placed in a support form to prevent curling upon drying. After the coated media was visibly dry (typically about 10-30 seconds, depending on media grade), it was placed in an oven at 120 °C for 3 minutes.

### Testing Oleophobicity

To determine the oleophobicity rating on a scale of 1 to 8, testing for oleophobicity was performed according to AATCC TM118-2013e2 entitled "Oil Repellency: Hydrocarbon Resistance Test," modified by rounding the oleophobicity ratings to the nearest integer value. Briefly, drops of various oils (described in **Table 3)** were placed on the coated media. Each oil drop was allowed to sit for one minute before the oleo rating was recorded. If a shadow appeared under the droplet, wetting by that oil was recorded; if no shadow appeared under a droplet, no wetting was recorded. Even the slightest appearance of a shadow constituted a wetting.

Resistance to wetting by KAYDOL^{®} (available from Sonneborn, Inc. in Parsippany, NJ) indicates an oleophobicity rating of 1; resistance to wetting by a 65:35 mixture of KAYDOL:n-hexadecane indicates an oleophobicity rating of 2; resistance to wetting by n-hexadecane indicates an oleophobicity rating of 3; resistance to wetting by n-tetradecane indicates an oleophobicity rating of 4; resistance to wetting by n-dodecane indicates an oleophobicity rating of 5; resistance to wetting by n-decane oleophobicity rating of 6; resistance to wetting by n-octane oleophobicity rating of 7; resistance to wetting by n-heptane oleophobicity rating of 8.

**Table 3. Oils used in the oleophobicity test. (ST = surface tension)**

| **Oil** | **ST (mN/m)** | **Oleo Rating** |
|---|---|---|
| Kaydol | 31.5 | 1 |
| 65:35 Kaydol:n-hexadecane | 29.6 | 2 |
| n-hexadecane | 27.3 | 3 |
| n-tetradecane | 26.4 | 4 |
| n-dodecane | 24.7 | 5 |
| n-decane | 23.5 | 6 |
| n-octane | 21.4 | 7 |
| n-heptane | 19.5 | 8 |

### Example 1

A coating solution of 5 % (w/v) or 6 % (w/v) of each polymer in solvent (as indicated in Table 4) was made, and successive concentrations (for example, 5 %, 4 %, 3 %, 2 %, and 1 %) were obtained via dilutions of the original solution. The coating solution was used to coat four different types of media as described in the Methods section. Oleophobicity of each media grade at each polymer concentration was evaluated. Exemplary results for high Mn poly(2,2,2-trifluoroethyl methacrylate) ("Polymer 1A") are shown in FIG. 1B. Exemplary results for high Mn poly(2,2,3,3,4,4,4-heptafluorobutyl methacrylate) ("Polymer 3A") and low Mn poly(2,2,3,3,4,4,4-heptafluorobutyl methacrylate) ("Polymer 3B") are shown in FIG. 1C.

**Table 4.**

| **Polymer** | **Solvent** |
|---|---|
| Polymer 1A | MEK |
| Polymer 1B | MEK |
| Polymer 2A | NOVEC^{™} 7100 |
| Polymer 2B | MEK |
| Polymer 3A | NOVEC^{™} 7200 |
| Polymer 3B | NOVEC^{™} 7200 |
| Polymer 4A | NOVEC^{™} 7200 |
| Polymer 4B | NOVEC^{™} 7200 |
| Polymer 5 | NOVEC^{™} 7200 |

The best oleophobicity rating achieved for a coating solution between 2-4 % (w/v) for each of the four media grades was determined for each fluorinated methacrylate and that oleophobicity rating is plotted against the number of fluorinated carbons in the fluorinated methacrylate, as shown in FIG. 1D - FIG. 1G. The weight average molecular weights (Mn) of the polymers plotted are shown in Table 5.

**Table 5.**

| | **Mn** | **Mw** | **Mw/Mn** |
|---|---|---|---|
| Polymer 1A | 25300 | 61400 | 2.4 |
| Polymer 1B | 3110 | 8620 | 2.8 |
| Polymer 2A | 11500 | 23400 | 2.0 |
| Polymer 2B | (no data) | (no data) | (no data) |
| Polymer 3A | 30400 | 73000 | 2.4 |
| Polymer 3B | 3920 | 9750 | 2.5 |
| Polymer 4A | 52500 | 135000 | 2.6 |
| Polymer 4B | 7140 | 15600 | 2.2 |
| Polymer 5A | 55200 | 108000 | 2.0 |

As can be seen in FIG. 1D - FIG. 1G, oleophobicity of poly(2,2,3,3,4,4,4-heptafluorobutyl methacrylate) (for both high and low molecular weights, Polymer 3A & Polymer 3B, respectively), was higher than expected based on the trendline on each media tested.

### Example 2

High molecular weight poly(2,2,3,3,4,4,4-heptafluorobutyl methacrylate) ("Polymer 3A") having different degrees of polymerization was produced as described in the General Fluoropolymer Synthesis Method using 5 g 2,2,3,3,4,4,4-heptafluorobutyl methacrylate, using varying amounts of AIBN (from 0.002 g to 0.025 g), and 4 mL Novec^{™} 7100 Engineered Fluid.

The polymers were coated on media using a 3 % (w/v) solution, and oleophobicity was tested on Membranes A - D. Similar initial oleophobicity ratings were observed at Mn values ranging from 166 kDa to 389 kDa, indicating that higher molecular weight poly(2,2,3,3,4,4,4-heptafluorobutyl methacrylate) did not provide improved initial oleophobicity over lower molecular weight polymers.

### Example 3

Poly(2,2,3,3,4,4,4-heptafluorobutyl acrylate) ("Polymer 3Z") was produced as described in the General Fluoropolymer Synthesis Method using 5 g 2,2,3,3,4,4,4-heptafluorobutyl acrylate, 0.036 g AIBN, and 4 mL NOVEC^{™} 7100 Engineered Fluid. The resulting polymer exhibited Mn = 390 kDa, Mw = 429 kDa, and Mw/Mn = 1.10.

A coating solution of 3 % (w/v) in NOVEC^{™} 7100 Engineered Fluid was made, and the coating solution was used to coat Membranes A - D as described in the Methods section. Oleophobicity of each media grade at each polymer concentration was evaluated and was found to be comparable to high Mn poly(2,2,3,3,4,4,4-heptafluorobutyl methacrylate) ("Polymer 3A"), prepared as described in Example 1. Results are shown in Table 6.

**Table 6.**

| | **Oleophobicity Rating** | | | |
|---|---|---|---|---|
| | Membrane A | Membrane B | Membrane C | Membrane D |
| Polymer 3A | 6 | 6 | 6 | 7 |
| Polymer 3Z | 6 | 6 | 5 | 6 |

The invention is not limited to the exact details shown and described, for variations obvious to one skilled in the art will be included within the invention defined by the claims.

## Claims

1. An article comprising:
a porous filtration medium; and
a fluoropolymer disposed on the porous filtration medium forming a treated porous filtration medium;
wherein the treated porous filtration medium has an oleophobicity of at least 1 on at least one major surface, as determined by AATCC test method 118, wherein oleophobicity ratings are rounded to nearest integer value, and
wherein the fluoropolymer is poly(2,2,3,3,4,4,4-heptafluorobutyl methacrylate) or poly(2,2,3,3,4,4,4-heptafluorobutyl acrylate).

2. The article of claim 1, wherein the porous filtration medium comprises expanded polytetrafluoroethylene (ePTFE), polyurethane, polypropylene, polyethylene, polyether sulfone, polyvinylidene fluoride, polycarbonate, polyolefin, polyamide, polyester, polysulfone, polyether, acrylic polymers, methacrylic polymers, polystyrene, a cellulosic polymer, or glass, or a combination thereof.

3. The article of claim 1 or 2, wherein the treated porous filtration medium is formed by a method comprising:
depositing a fluoropolymer-liquid mixture onto the porous filtration medium by contacting the porous filtration medium with a mixture comprising the fluoropolymer and a liquid comprising an organic solvent; and
removing the liquid,
optionally wherein forming the treated porous filtration medium further comprises heat treating the treated porous filtration medium.

4. The article of claim 3, wherein heat treating the porous filtration medium comprises:
heating the porous filtration medium at a temperature of at least 70 °C, at least 80 °C, at least 90 °C, at least 100 °C, or at least 120 °C;
heating the porous filtration medium at a temperature of up to 130 °C, up to 140 °C, or up to 150 °C;
heating the porous filtration medium to a temperature of at least 70 °C, at least 80 °C, at least 90 °C, at least 100 °C, or at least 120 °C;
heating the porous filtration medium to a temperature of up to 130°C, up to 140°C, or up to 150 °C;
heating the porous filtration medium for at least 1 minute, at least 2 minutes, or at least 3 minutes; and/or
heating the porous filtration medium for up to 3 minutes, up to 4 minutes, up to 5 minutes, or up to 10 minutes.

5. The article of any one of the preceding claims, wherein the number average molecular weight (Mn) of the fluoropolymer is at least 3 kDa, at least 5 kDa, at least 10 kDa, at least 100 kDa, at least 150 kDa, at least 200 kDa, at least 250 kDa, at least 300 kDa, or at least 350 kDa.

6. The article of any one of the preceding claims, wherein
the article further comprises a support layer,
optionally wherein the support layer comprises a polymeric material,
further optionally wherein the polymeric material comprises polypropylene,
polyethylene, polyester, or nylon, or a combination thereof.

7. The article of any one of the preceding claims, wherein
a) the treated porous filtration medium has an oleophobicity of 2 or higher, 3 or higher, 4 or higher, 5 or higher, or 6 or higher on at least one major surface; and/or
b) the treated porous filtration medium has an oleophobicity of 8 or lower or 7 or lower; and/or
c) the treated porous filtration medium has an oleophobicity of 1 or higher, 2 or higher, 3 or higher, 4 or higher, 5 or higher, or 6 or higher, on two major surfaces of the porous filtration medium;
and/or
d) the treated porous filtration medium has an oleophobicity of 8 or lower or 7 or lower on two major surfaces of the porous filtration medium.

8. A method of using the article of any one of the preceding claims, optionally wherein the method comprises using the article as a biphasic separator.

9. A method of making an article comprising a treated porous filtration medium, the method comprising:
depositing a fluoropolymer-liquid mixture onto porous filtration medium by contacting the porous filtration medium with a mixture comprising a fluoropolymer and a liquid to form the treated porous filtration medium, optionally wherein contacting the porous filtration medium with the fluoropolymer-liquid mixture comprises immersing the porous filtration medium in the fluoropolymer-liquid mixture; and
removing the liquid,
wherein the fluoropolymer is poly(2,2,3,3,4,4,4-heptafluorobutyl methacrylate) or poly(2,2,3,3,4,4,4-heptafluorobutyl acrylate),
optionally wherein forming the treated porous filtration medium further comprises heat treating the treated porous filtration medium.

10. The method of claim 9, wherein the liquid comprises an organic solvent,
optionally
wherein the organic solvent comprises methyl ethyl ketone (MEK) or a fluorosolvent, optionally wherein the fluorosolvent comprises a fluorinated ether.

11. The method of claim 10, wherein the fluoropolymer-liquid mixture comprises a fluoropolymer completely dissolved in the organic solvent.

12. The method of claim 9, wherein the fluoropolymer-liquid mixture comprises an emulsion.

13. The method of any one of claims 9 to 12, wherein heat treating the porous filtration medium comprises
heating the porous filtration medium at a temperature of at least 70 °C, at least 80 °C, at least 90 °C, at least 100 °C, or at least 120 °C;
heating the porous filtration medium at a temperature of up to 130 °C, up to 140 °C, or up to 150 °C;
heating the porous filtration medium to a temperature of at least 70 °C, at least 80 °C, at least 90 °C, at least 100 °C, or at least 120 °C;
heating the porous filtration medium to a temperature of up to 130 °C, up to 140 °C, or up to 150 °C;
heating the porous filtration medium for at least 1 minute, at least 2 minutes, or at least 3 minutes; and/or
heating the porous filtration medium for up to 3 minutes, up to 4 minutes, up to 5 minutes, or up to 10 minutes.

14. The method of any one of claims 9 to 13, wherein the number average molecular weight (Mn) of the fluoropolymer is at least 3 kDa, at least 5 kDa, at least 10 kDa, at least 100 kDa, at least 150 kDa, at least 200 kDa, at least 250 kDa, at least 300 kDa, or at least 350 kDa.

15. The method of any one of claims 9 to 14, wherein the treated porous filtration medium has an oleophobicity of 2 or higher, 3 or higher, 4 or higher, 5 or higher, or 6 or higher on at least one major surface, as determined by AATCC test method 118, wherein oleophobicity ratings are rounded to nearest integer value, optionally
wherein the treated porous filtration medium has an oleophobicity of 8 or lower or 7 or lower; or wherein the treated porous filtration medium has an oleophobicity of 1 or higher, 2 or higher, 3 or higher, 4 or higher, 5 or higher, or 6 or higher on two major surfaces of the porous filtration medium, optionally,
wherein the treated porous filtration medium has an oleophobicity of 8 or lower or 7 or lower on two major surfaces of the porous filtration medium.

## Patentansprüche

1. Erzeugnis, umfassend:
ein poröses Filterationsmedium; und
ein Fluorpolymer, das auf dem porösen Filterationsmedium angeordnet ist, wobei es ein behandeltes poröses Filterationsmedium bildet;
wobei das behandelte poröse Filterationsmedium eine Oleophobie von mindestens 1 auf mindestens einer Hauptoberfläche, wie durch das AATCC-Prüfverfahren 118 bestimmt, aufweist, wobei Oleophobie-Bewertungen auf den nächsten ganzzahligen Wert gerundet werden, und
wobei das Fluorpolymer Poly(2,2,3,3,4,4,4-heptafluorbutylmethacrylat) oder Poly(2,2,3,3,4,4,4-heptafluorbutylacrylat) ist.

2. Erzeugnis nach Anspruch 1, wobei das poröse Filterationsmedium expandiertes Polytetrafluorethylen (ePTFE), Polyurethan, Polypropylen, Polyethylen, Polyethersulfon, Polyvinylidenfluorid, Polycarbonat, Polyolefin, Polyamid, Polyester, Polysulfon, Polyether, Acrylpolymere, Methacrylpolymere, Polystyrol, ein Cellulosepolymer oder Glas oder eine Kombination davon umfasst.

3. Erzeugnis nach Anspruch 1 oder 2, wobei das behandelte poröse Filterationsmedium durch ein Verfahren gebildet wird, umfassend:
Abscheiden einer Fluorpolymerflüssigkeitsmischung auf das poröse Filterationsmedium durch Inberührungbringen des porösen Filterationsmediums mit einer Mischung, umfassend das Fluorpolymer und eine Flüssigkeit, umfassend ein organisches Lösungsmittel; und
Entfernen der Flüssigkeit,
optional wobei das Bilden des behandelten porösen Filterationsmediums ferner ein Wärmebehandeln des behandelten porösen Filterationsmediums umfasst.

4. Erzeugnis nach Anspruch 3, wobei das Wärmebehandeln des porösen Filterationsmediums umfasst:
Erwärmen des porösen Filterationsmediums bei einer Temperatur von mindestens 70 °C, mindestens 80 °C, mindestens 90 °C, mindestens 100 °C oder mindestens 120 °C;
Erwärmen des porösen Filterationsmediums bei einer Temperatur von bis zu 130 °C, bis zu 140 °C oder bis zu 150 °C;
Erwärmen des porösen Filterationsmediums auf eine Temperatur von mindestens 70 °C, mindestens 80 °C, mindestens 90 °C, mindestens 100 °C oder mindestens 120 °C;
Erwärmen des porösen Filterationsmediums auf eine Temperatur von bis zu 130 °C, bis zu 140 °C oder bis zu 150 °C;
Erwärmen des porösen Filterationsmediums für mindestens 1 Minute, mindestens 2 Minuten oder mindestens 3 Minuten; und/oder
Erwärmen des porösen Filterationsmediums für bis zu 3 Minuten, bis zu 4 Minuten, bis zu 5 Minuten oder bis zu 10 Minuten.

5. Erzeugnis nach einem der vorstehenden Ansprüche, wobei das zahlenmittlere Molekulargewicht (Mn) des Fluorpolymers mindestens 3 kDa, mindestens 5 kDa, mindestens 10 kDa, mindestens 100 kDa, mindestens 150 kDa, mindestens 200 kDa, mindestens 250 kDa, mindestens 300 kDa oder mindestens 350 kDa, beträgt.

6. Erzeugnis nach einem der vorstehenden Ansprüche, wobei
das Erzeugnis ferner eine Trägerschicht umfasst,
optional wobei die Trägerschicht ein Polymermaterial umfasst,
ferner optional, wobei das Polymermaterial Polypropylen,
Polyethylen, Polyester oder Nylon oder eine Kombination davon umfasst.

7. Erzeugnis nach einem der vorstehenden Ansprüche, wobei
a) das behandelte poröse Filterationsmedium eine Oleophobie von 2 oder höher, 3 oder höher, 4 oder höher, 5 oder höher oder 6 oder höher, auf mindestens einer Hauptoberfläche aufweist; und/oder
b) das behandelte poröse Filterationsmedium eine Oleophobie von 8 oder niedriger oder 7 oder niedriger aufweist;
und/oder
c) das behandelte poröse Filterationsmedium eine Oleophobie von 1 oder höher, 2 oder höher, 3 oder höher, 4 oder höher, 5 oder höher oder 6 oder höher, auf zwei Hauptoberflächen des porösen Filterationsmediums aufweist;
und/oder
d) das behandelte poröse Filterationsmedium eine Oleophobie von 8 oder niedriger oder 7 oder niedriger auf zwei Hauptoberflächen des porösen Filterationsmediums aufweist.

8. Verfahren zum Verwenden des Erzeugnisses nach einem der vorstehenden Ansprüche, optional wobei das Verfahren ein Verwenden des Erzeugnisses als einen Zweiphasenseparator umfasst.

9. Verfahren zum Herstellen eines Erzeugnisses, umfassend ein behandeltes poröses Filterationsmedium, das Verfahren umfassend:
Abscheiden einer Fluorpolymerflüssigkeitsmischung auf ein poröses Filterationsmedium durch Inberührungbringen des porösen Filterationsmediums mit einer Mischung, umfassend ein Fluorpolymer und eine Flüssigkeit, um das behandelte poröse Filterationsmedium zu bilden, optional wobei das Inberührungbringen des porösen Filterationsmediums mit der Fluorpolymerflüssigkeitsmischung ein Eintauchen des porösen Filterationsmediums in die Fluorpolymerflüssigkeitsmischung umfasst; und
Entfernen der Flüssigkeit,
wobei das Fluorpolymer Poly(2,2,3,3,4,4,4-heptafluorbutylmethacrylat) oder Poly(2,2,3,3,4,4,4-heptafluorbutylacrylat) ist,
optional wobei das Bilden des behandelten porösen Filterationsmediums ferner das Wärmebehandeln des behandelten porösen Filterationsmediums umfasst.

10. Verfahren nach Anspruch 9, wobei die Flüssigkeit ein organisches Lösungsmittel umfasst,
optional
wobei das organische Lösungsmittel Methylethylketon (MEK) oder ein Fluorlösungsmittel umfasst, optional wobei das Fluorlösungsmittel einen fluorierten Ether umfasst.

11. Verfahren nach Anspruch 10, wobei die Fluorpolymerflüssigkeitsmischung ein Fluorpolymer, das in dem organischen Lösungsmittel vollständig gelöst ist, umfasst.

12. Verfahren nach Anspruch 9, wobei die Fluorpolymerflüssigkeitsmischung eine Emulsion umfasst.

13. Verfahren nach einem der Ansprüche 9 bis 12, wobei das Wärmebehandeln des porösen Filterationsmediums umfasst
Erwärmen des porösen Filterationsmedium bei einer Temperatur von mindestens 70 °C, mindestens 80 °C, mindestens 90 °C, mindestens 100 °C oder mindestens 120 °C;
Erwärmen des porösen Filterationsmediums bei einer Temperatur von bis zu 130 °C, bis zu 140 °C oder bis zu 150 °C;
Erwärmen des porösen Filterationsmediums auf eine Temperatur von mindestens 70 °C, mindestens 80 °C, mindestens 90 °C, mindestens 100 °C oder mindestens 120 °C;
Erwärmen des porösen Filterationsmediums auf eine Temperatur von bis zu 130 °C, bis zu 140 °C oder bis zu 150 °C;
Erwärmen des porösen Filterationsmediums für mindestens 1 Minute, mindestens 2 Minuten oder mindestens 3 Minuten; und/oder
Erwärmen des porösen Filterationsmediums für bis zu 3 Minuten, bis zu 4 Minuten, bis zu 5 Minuten oder bis zu 10 Minuten.

14. Verfahren nach einem der Ansprüche 9 bis 13, wobei das zahlenmittlere Molekulargewicht (Mn) des Fluorpolymers mindestens 3 kDa, mindestens 5 kDa, mindestens 10 kDa, mindestens 100 kDa, mindestens 150 kDa, mindestens 200 kDa, mindestens 250 kDa, mindestens 300 kDa oder mindestens 350 kDa, beträgt.

15. Verfahren nach einem der Ansprüche 9 bis 14, wobei das behandelte poröse Filterationsmedium eine Oleophobie von 2 oder höher, 3 oder höher, 4 oder höher, 5 oder höher oder 6 oder höher, auf mindestens einer Hauptoberfläche, wie durch das AATCC-Prüfverfahren 118 bestimmt, aufweist, wobei Oleophobie-Bewertungen auf den nächsten ganzzahligen Wert gerundet werden, optional
wobei das behandelte poröse Filterationsmedium eine Oleophobie von 8 oder niedriger oder 7 oder niedriger aufweist; oder wobei das behandelte poröse Filterationsmedium eine Oleophobie von 1 oder höher, 2 oder höher, 3 oder höher, 4 oder höher, 5 oder höher oder 6 oder höher, auf zwei Hauptoberflächen des porösen Filterationsmediums aufweist, optional,
wobei das behandelte poröse Filterationsmedium eine Oleophobie von 8 oder niedriger oder 7 oder niedriger auf zwei Hauptflächen des porösen Filterationsmediums aufweist.

## Revendications

1. Article comprenant :
un milieu de filtration poreux ; et
un polymère fluoré disposé sur le milieu de filtration poreux formant un milieu de filtration poreux traité ;
dans lequel le milieu de filtration poreux traité a un caractère oléophobe d'au moins 1 sur au moins une surface principale, comme déterminé par la méthode d'essai 118 de l'AATCC, dans lequel les classifications de caractère oléophobe sont arrondies à la valeur entière la plus proche, et
dans lequel le polymère fluoré est le poly(méthacrylate de 2,2,3,3,4,4,4-heptafluorobutyle) ou le poly(acrylate de 2,2,3,3,4,4,4-heptafluorobutyle).

2. Article selon la revendication 1, dans lequel le milieu de filtration poreux comprend du polytétrafluoroéthylène expansé (ePTFE), du polyuréthane, du polypropylène, du polyéthylène, de la polyéthersulfone, du poly(fluorure de vinylidène), du polycarbonate, de la polyoléfine, du polyamide, du polyester, de la polysulfone, du polyéther, des polymères acryliques, des polymères méthacryliques, du polystyrène, un polymère cellulosique, ou du verre, ou une combinaison de ceux-ci.

3. Article selon la revendication 1 ou 2, dans lequel le milieu de filtration poreux traité est formé par un procédé comprenant :
le dépôt d'un mélange polymère fluoré-liquide sur le milieu de filtration poreux par mise en contact du milieu de filtration poreux avec un mélange comprenant le polymère fluoré et un liquide comprenant un solvant organique ; et
l'élimination du liquide,
facultativement dans lequel la formation du milieu de filtration poreux traité comprend en outre le traitement thermique du milieu de filtration poreux traité.

4. Article selon la revendication 3, dans lequel le traitement thermique du milieu de filtration poreux comprend :
le chauffage du milieu de filtration poreux à une température d'au moins 70 °C, d'au moins 80 °C, d'au moins 90 °C, d'au moins 100 °C, ou d'au moins 120 °C ;
le chauffage du milieu de filtration poreux à une température allant jusqu'à 130 °C, jusqu'à 140 °C, ou jusqu'à 150 °C ;
le chauffage du milieu de filtration poreux à une température d'au moins 70 °C, d'au moins 80 °C, d'au moins 90 °C, d'au moins 100 °C, ou d'au moins 120 °C ;
le chauffage du milieu de filtration poreux à une température allant jusqu'à 130 °C, jusqu'à 140 °C, ou jusqu'à 150 °C ;
le chauffage du milieu de filtration poreux pendant au moins 1 minute, au moins 2 minutes, ou au moins 3 minutes ; et/ou
le chauffage du milieu de filtration poreux pendant jusqu'à 3 minutes, jusqu'à 4 minutes, jusqu'à 5 minutes, ou jusqu'à 10 minutes.

5. Article selon l'une quelconque des revendications précédentes, dans lequel la masse moléculaire moyenne en nombre (Mn) du polymère fluoré est d'au moins 3 kDa, d'au moins 5 kDa, d'au moins 10 kDa, d'au moins 100 kDa, d'au moins 150 kDa, d'au moins 200 kDa, d'au moins 250 kDa, d'au moins 300 kDa, ou d'au moins 350 kDa.

6. Article selon l'une quelconque des revendications précédentes, dans lequel
l'article comprend en outre une couche de support,
facultativement dans lequel la couche de support comprend un matériau polymère,
facultativement en outre dans lequel le matériau polymère comprend du polypropylène,
du polyéthylène, du polyester, ou du nylon, ou une combinaison de ceux-ci.

7. Article selon l'une quelconque des revendications précédentes, dans lequel
a) le milieu de filtration poreux traité a un caractère oléophobe de 2 ou plus, de 3 ou plus, de 4 ou plus, de 5 ou plus, ou de 6 ou plus, sur au moins une surface principale ; et/ou
b) le milieu de filtration poreux traité a un caractère oléophobe de 8 ou moins ou de 7 ou moins ;
et/ou
c) le milieu de filtration poreux traité a un caractère oléophobe de 1 ou plus, de 2 ou plus, de 3 ou plus, de 4 ou plus, de 5 ou plus, ou de 6 ou plus, sur deux surfaces principales du milieu de filtration poreux ;
et/ou
d) le milieu de filtration poreux traité a un caractère oléophobe de 8 ou moins ou de 7 ou moins sur deux surfaces principales du milieu de filtration poreux.

8. Procédé d'utilisation de l'article selon l'une quelconque des revendications précédentes, facultativement dans lequel le procédé comprend l'utilisation de l'article en tant que séparateur biphasique.

9. Procédé de fabrication d'un article comprenant un milieu de filtration poreux traité, le procédé comprenant :
le dépôt d'un mélange polymère fluoré-liquide sur un milieu de filtration poreux par mise en contact du milieu de filtration poreux avec un mélange comprenant un polymère fluoré et un liquide pour former le milieu de filtration poreux traité, facultativement dans lequel la mise en contact du milieu de filtration poreux avec le mélange polymère fluoré-liquide comprend l'immersion du milieu de filtration poreux dans le mélange polymère fluoré-liquide ; et
l'élimination du liquide,
dans lequel le polymère fluoré est le poly(méthacrylate de 2,2,3,3,4,4,4-heptafluorobutyle) ou le poly(acrylate de 2,2,3,3,4,4,4-heptafluorobutyle),
facultativement dans lequel la formation du milieu de filtration poreux traité comprend en outre le traitement thermique du milieu de filtration poreux traité.

10. Procédé selon la revendication 9, dans lequel le liquide comprend un solvant organique,
facultativement
dans lequel le solvant organique comprend de la méthyléthylcétone (MEC) ou un solvant fluoré, facultativement dans lequel le solvant fluoré comprend un éther fluoré.

11. Procédé selon la revendication 10, dans lequel le mélange polymère fluoré-liquide comprend un polymère fluoré complètement dissous dans le solvant organique.

12. Procédé selon la revendication 9, dans lequel le mélange polymère fluoré-liquide comprend une émulsion.

13. Procédé selon l'une quelconque des revendications 9 à 12, dans lequel le traitement thermique du milieu de filtration poreux comprend
le chauffage du milieu de filtration poreux à une température d'au moins 70 °C, d'au moins 80 °C, d'au moins 90 °C, d'au moins 100 °C, ou d'au moins 120 °C ;
le chauffage du milieu de filtration poreux à une température allant jusqu'à 130 °C, jusqu'à 140 °C, ou jusqu'à 150 °C ;
le chauffage du milieu de filtration poreux à une température d'au moins 70 °C, d'au moins 80 °C, d'au moins 90 °C, d'au moins 100 °C, ou d'au moins 120 °C ;
le chauffage du milieu de filtration poreux à une température allant jusqu'à 130 °C, jusqu'à 140 °C, ou jusqu'à 150 °C ;
le chauffage du milieu de filtration poreux pendant au moins 1 minute, au moins 2 minutes, ou au moins 3 minutes ; et/ou
le chauffage du milieu de filtration poreux pendant jusqu'à 3 minutes, jusqu'à 4 minutes, jusqu'à 5 minutes, ou jusqu'à 10 minutes.

14. Procédé selon l'une quelconque des revendications 9 à 13, dans lequel la masse moléculaire moyenne en nombre (Mn) du polymère fluoré est d'au moins 3 kDa, d'au moins 5 kDa, d'au moins 10 kDa, d'au moins 100 kDa, d'au moins 150 kDa, d'au moins 200 kDa, d'au moins 250 kDa, d'au moins 300 kDa, ou d'au moins 350 kDa.

15. Procédé selon l'une quelconque des revendications 9 à 14, dans lequel le milieu de filtration poreux traité a un caractère oléophobe de 2 ou plus, de 3 ou plus, de 4 ou plus, de 5 ou plus, ou de 6 ou plus sur au moins une surface principale, comme déterminé par la méthode d'essai 118 de l'AATCC, dans lequel les classifications de caractère oléophobe sont arrondies à la valeur entière la plus proche, facultativement
dans lequel le milieu de filtration poreux traité a un caractère oléophobe de 8 ou moins ou de 7 ou moins ; ou dans lequel le milieu de filtration poreux traité a un caractère oléophobe de 1 ou plus, de 2 ou plus, de 3 ou plus, de 4 ou plus, de 5 ou plus, ou de 6 ou plus sur deux surfaces principales du milieu de filtration poreux, facultativement,
dans lequel le milieu de filtration poreux traité a un caractère oléophobe de 8 ou moins ou de 7 ou moins sur deux surfaces principales du milieu de filtration poreux.
